# EUROPÄISCHE PATENTSCHRIFT

(11) **EP 3 086 554 B1**
(45) Veröffentlichungstag und Bekanntmachung des Hinweises auf die Patenterteilung: **24.04.2019**
(21) Anmeldenummer: 15164966.2
(22) Anmeldetag: 24.04.2015
(51) Int. Cl.: H04N 13/264, H04N 13/221

(54) **SYSTEM UND VERFAHREN ZUR HERSTELLUNG UND ABGABE STEREOSKOPISCHER VIDEOFILME**
SYSTEM AND METHOD FOR PRODUCING AND DISPENSING STEREOSCOPIC VIDEO FILMS
SYSTÈME ET PROCÉDÉ DE PRODUCTION ET DISTRIBUTION DE FILMS VIDÉO STÉRÉOSCOPIQUES

(43) Veröffentlichungstag der Anmeldung: 26.10.2016
(73) Patentinhaber: Visual Vertigo Software Technologies GmbH, 1230 Wien (AT)
(72) Erfinder: Kleszcz, Alexander, 43300 Bielsko Biala (PL)
(74) Vertreter: Schwarz & Partner Patentanwälte OG

(56) Entgegenhaltungen:
- WO-A1-2010/032058
- US-A1- 2007 097 206
- US-A1- 2011 141 227
- ZHANG X ET AL: "VISUAL VIDEO IMAGE GENERATION FROM VIDEO DATA USING PHASE CORRELATION TECHNIQUE", IEICE TRANSACTIONS ON INFORMATION AND SYSTEMS, INFORMATION & SYSTEMS SOCIETY, TOKYO, JP, Bd. E83-D, Nr. 6, 1. Juni 2000 (2000-06-01), Seiten 1266-1273, XP000976220, ISSN: 0916-8532

## Beschreibung

Die Erfindung betrifft ein System zur Abgabe eines stereoskopischen Videofilms, wobei das System eine Datenverarbeitungseinheit aufweist, die zum Empfang und zur Verarbeitung von einem monoskopischen Videofilm, und zur Abgabe des stereoskopischen Videofilms ausgebildet ist, wobei der monoskopische Videofilm mit einem, nur ein Einzelobjektiv aufweisenden, Videoaufnahmegerät aufgenommenen wurde.

Die Erfindung betrifft weiters ein Verfahren zur Herstellung und Wiedergabe eines stereoskopischen Videofilms aus einem, mit einem, nur ein Einzelobjektiv aufweisenden, Videoaufnahmegerät aufgenommenen, monoskopischen Videofilm.

Nach dem Stand der Technik liegt der Schwerpunkt der aktuellen Anzeigetechnologie, wie sie beispielsweise bei Fernsehgeräten, Computerbildschirmen oder in tragbaren Smartphones oder Tablet-Computern zum Einsatz kommt, auf der zweidimensionalen oder monoskopischen Darstellung. Jedoch basiert das menschliche Sehvermögen auf dem räumlichen oder stereoskopischen Sehen. Um stereoskopische Bilder wiedergeben zu können, bedient man sich der Stereovision, also Bildpaaren mit Tiefeneindruck, die aus jeweils einem Bild für jedes der beiden Augen bestehen, und der Bewegungsparallaxe, welche die Darstellung der Position verschiedener Objekte im Raum durch Bildfolgen eines bewegten Beobachters ermöglicht. Stereoskopische Bilder oder Videofilme bestehen deshalb aus zwei zweidimensionalen Bildern, jeweils für eines der beiden Augen des Betrachters. Das menschliche Gehirn empfängt diese zwei unterschiedlichen Bilder und generiert daraus die räumliche Struktur des Bildes oder Videofilms.

Das Dokument "VISUAL VIDEO IMAGE GENERATION FROM VIDEO DATA USING PHASE CORRELATION TECHNIQUE", von Zhang X. et al, offenbart ein System zur Verarbeitung von einem monoskopischen Videofilm in einen stereoskopischen Videofilm, wobei der monoskopische Videofilm mit einem, nur ein Einzelobjektiv aufweisenden, Videoaufnahmegerät aufgenommenen wurde. Das System ermittelt hierzu eine Bewegungsrichtung des Videoaufnahmegeräts relativ zu einem gefilmten Objekt und unterscheidet zwischen einer Bewegungskomponente des Videoaufnahmegeräts in Richtung der optischen Achse des Einzelobjektivs, und einer Bewegungskomponente quer zu dieser Richtung.

Das Dokument US 2008/0080852 A1 offenbart ein System und ein Verfahren zur Erzeugung von stereoskopischen Bildern. Das System nutzt dabei eine Kamera, um mehrere Multifokus-Aufnahmen eines Objekts zu machen und daraus ein stereoskopisches Bild zu generieren. Dabei wird, mittels einer Datenverarbeitungseinheit und einem komplexen Algorithmus, aus den Multifokus-Aufnahmen ein kombinierter Tiefeneindruck errechnet. Aus den Tiefeneindrücken verschiedener Aufnahmen wird anhand eines weiteren komplexen Algorithmus ein Single-Fokus-Bild ermittelt. Mittels sogenanntem "tiefenbasiertem Rendering" wird schließlich ein stereoskopisches Bild, bestehend aus einem Bild für das linke Auge und einem Bild für das Rechte Auge des Betrachters, erstellt, welches über eine stereoskopische Anzeigeeinheit darstellbar ist.

Bei dem bekannten System hat sich als Nachteil erwiesen, dass für die Erzeugung eines jeden einzelnen stereoskopischen Bildes, mehrere Multifokus-Aufnahmen eines Objekts benötigt werden. Dies belastet die Datenverarbeitungseinheit wie auch einen etwaig benötigten Permanentspeicher gleichermaßen. Für den Fall einer Datenübertragung in Echtzeit kann die sehr große Datenmenge zu Übertragungsproblemen führen. Dadurch, dass für die Erzeugung des stereoskopischen Bildes mehrere komplexe Algorithmen ausgeführt werden, ist die Anforderung an die Leistungsfähigkeit der Datenverarbeitungseinheit sehr hoch. Da die benötigte Zeit für die Erzeugung des stereoskopischen Bildes im Wesentlichen durch die Dauer der Datenübertragung sowie die Durchführung und Berechnung der Algorithmen bestimmt ist, kann diese für eine praktische Anwendung zu lange sein.

Zusätzlich hat sich als Nachteil erwiesen, dass für die Erzeugung eines stereoskopischen Videofilmes, das im vorhergehenden Absatz beschriebene Verfahren für jedes einzelne Frame des Videofilmes durchgeführt werden muss. Dies führt unweigerlich zu noch größeren Nachteilen bezüglich der Anforderung an die Leistungsfähigkeit der Datenverarbeitungseinheit sowie der, für die Erzeugung des stereoskopischen Videos, benötigten Zeit.

Der Erfindung liegt die Aufgabe zugrunde, ein System und ein zugehöriges Verfahren zur Herstellung und Ausgabe stereoskopischer Videofilme zu schaffen, bei dem die vorstehenden Nachteile nicht auftreten, und bei dem die Anforderung an die Leistungsfähigkeit der Datenverarbeitungseinheit sowie die, für die Erzeugung des stereoskopischen Videos, benötigte Zeit deutlich verringert sind.

Erfindungsgemäß wird diese Aufgabenstellung gelöst durch ein System gemäss Anspruch 1 und durch ein Verfahren gemäss Anspruch 14.

Hierdurch ist der Vorteil erhalten, dass der stereoskopische Videofilm direkt aus dem monoskopischen Videofilm erstellt werden kann, der mit dem, nur ein Einzelobjektiv aufweisenden, Videoaufnahmegerät aufgenommen wurde. Dabei ist kein technisch aufwendiges und kostenintensives, stereoskopisches Aufnahmegerät nötig. Das zugehörige Verfahren, um den stereoskopischen Videofilm aus dem monoskopischen Videofilm zu ermitteln und abzugeben, benötigt, im Vergleich zum oben beschrieben Stand der Technik, keine langwierigen und komplizierten Algorithmen, die von der Datenverarbeitungseinheit auszuführen sind.

Ebenso benötigt das erfindungsgemäße System keine mehrfachen Multifokus-Aufnahmen oder Tiefeneindrücke von mehrfachen Aufnahmen. Diese Vorteile reduzieren die verursachte Datenmenge, die benötigte Auswertezeit, sowie damit einhergehende Entstehungszeit und -kosten, des stereoskopischen Videofilms.

Das System benötigt in einer erfindungsgemäßen Ausführung zur Herstellung und Abgabe des stereoskopischen Videofilms aus dem monoskopischen Videofilm ausschließlich die Bildinformation des monoskopischen Videofilms. Aus diesem kann es die dem monoskopischen Videofilm zugeordnete Bewegungsinformation, die aus der Bewegungsrichtung des Videoaufnahmegeräts in Relation zu dem gefilmten Objekt besteht, ermitteln.

In einer vorteilhaften Ausführung liegt dem System bereits nach dem Empfangen der Daten, die, dem monoskopischen Videofilm zugeordnete, Bewegungsinformation vor, und die Datenverarbeitungseinheit muss diese Bewegungsinformation nur mehr auswerten.

Aus dem monoskopischen Videofilm und der zugeordneten Bewegungsinformation kann die Datenverarbeitungseinheit nun zwei inhaltlich identische, aber zeitlich zueinander verzögerte monoskopischen Videofilme erstellen. Diese gibt sie Seite-an-Seite als den stereoskopischen Videofilm ab.

Zum Auswerten der Bewegungsinformation unterscheidet die Datenverarbeitungseinheit eine erste Bewegungskomponente des Videoaufnahmegeräts, in Richtung der optischen Achse des Einzelobjektivs, und eine zweite Bewegungskomponente des Videoaufnahmegeräts, quer zur Richtung der optischen Achse des Einzelobjektivs. Ist während einer Abfolge von zumindest zwei aufeinanderfolgenden Frames des aufgenommenen monoskopischen Videofilms ausschließlich die erste Bewegungskomponente vorhanden, wird dieser Frame des stereoskopischen Videofilms gemäß einer ersten Verarbeitung ermittelt. Ist hingegen während einer Abfolge von zumindest zwei aufeinanderfolgenden Frames die zweite Bewegungskomponente vorhanden, wird dieser Frame des stereoskopischen Videofilms gemäß einer zweiten Verarbeitung ermittelt.

Die beiden unterschiedlichen Verarbeitungen sind insofern vorteilhaft, dass sie es dem System ermöglichen, zu jedem Zeitpunkt der Bewegung und bei jeder Bewegungsrichtung des Videoaufnahmegeräts, einen stereoskopischen Effekt, und folglich den stereoskopischen Videofilm, zu ermitteln.

Dabei benutzt die Datenverarbeitungseinheit bei der ersten Verarbeitung nur die linke Hälfte oder nur die rechte Hälfte der Frames des monoskopischen Videofilms zum Ermitteln des stereoskopischen Videofilms. So wird beispielsweise bei ausgewählter linker Hälfte der Frames, jeder Frame des monoskopischen Videofilms auf seine linke Hälfte zugeschnitten. Dieser zugeschnittene monoskopische Videofilm wird dann kopiert, und die beiden inhaltlich identen Filme werden Seite-an-Seite, jeweils für das linke Auge und das rechte Auge des Betrachters, als stereoskopischer Videofilm abgegeben. Um den stereoskopischen Effekt zu ermöglichen, wird der dem linken Auge des Betrachters zugehörige monoskopische Videofilm des stereoskopischen Videofilms um einen bestimmten Betrag von Frames pro Sekunde verzögert, und der dem rechten Auge des Betrachters zugehörige monoskopische Videofilm des stereoskopischen Videofilms unverzögert abgegeben.

Bei der zweiten Verarbeitung kann die Datenverarbeitungseinheit sowohl die gesamten, also nicht zugeschnittenen, Frames benutzen, oder nur die linke oder die rechte Hälfte der Frames entsprechend der ersten Verarbeitung. Die hierbei vorliegende zweite Bewegungskomponente entspricht dabei einer relativen Bewegung des Videoaufnahmegeräts zum gefilmten Objekt von - beispielsweise - links nach rechts. Um den stereoskopischen Effekt zu ermöglichen, wird dann im vorliegenden Beispiel der dem linken Auge des Betrachters zugehörige monoskopische Videofilm des stereoskopischen Videofilms um einen bestimmten Betrag von Frames pro Sekunde verzögert, und der dem rechten Auge des Betrachters zugehörige monoskopische Videofilm des stereoskopischen Videofilms unverzögert abgegeben.

In einer vorteilhaften Ausführung benutzt die Datenverarbeitungseinheit, sobald, während einer Abfolge von zumindest zwei aufeinanderfolgenden Frames innerhalb des aufgenommenen monoskopischen Videofilms, die erste Bewegungskomponente vorliegt, auch bei der zweiten Verarbeitung immer nur die linke Hälfte oder nur die rechte Hälfte aller Frames des monoskopischen Videofilms. Dies hat den Vorteil, dass während einer Betrachtung des stereoskopischen Videofilms keine plötzliche Anpassung des Videoformats innerhalb der stereoskopischen Anzeigeeinheit durchgeführt werden muss, was für den Betrachter störend wären.

In einer vorteilhaften Ausführung des Systems umfasst die dem monoskopischen Videofilm zugeordnete Bewegungsinformation, zusätzlich zu der Bewegungsrichtung des Videoaufnahmegeräts relativ zu dem gefilmten Objekt, eine Bewegungsgeschwindigkeit und eine Aufnahmegeschwindigkeit des Videoaufnahmegeräts. Dies hat den Vorteil, dass anhand dieser Information die Datenverarbeitungseinheit automatisch und in Echtzeit ermitteln kann, welcher Teil des stereoskopischen Videofilms um welchen Betrag verzögert werden muss, um den stereoskopischen Effekt optimal zu ermöglichen.

In einer weiteren vorteilhaften Ausführung des Systems lässt sich manuell von einem Benutzer steuern, welcher Teil des stereoskopischen Videofilms von der Datenverarbeitungseinheit um welchen Betrag verzögert abgegeben wird, um den stereoskopischen Effekt in individueller Weise zu ermöglichen.

In einer vorteilhaften Ausführung des Systems weist das Videoaufnahmegerät einen 3-Achsenstabilisator auf. Der 3-Achsenstabilisator dient zum Stabilisieren des Videoaufnahmegeräts während der Aufnahme des monoskopischen Videofilms. Dadurch wird ein "verwackeln" der Aufnahme verhindert und ein stereoskopischer Effekt optimal ermöglicht.

Das Vorsehen eines Permanentdatenspeichers ermöglicht das Speichern des mit dem Videoaufnahmegerät aufgenommenen monoskopischen Videofilms. Dieser kann dann von der Datenverarbeitungseinheit zeitlich und örtlich unabhängig empfangen und ausgewertet werden. Andererseits ermöglicht das Vorsehen einer Datenkommunikationseinheit zur drahtlosen Kommunikation, dass der aufgenommene monoskopische Videofilm, und vorzugsweise auch die entsprechend zugeordnete Bewegungsinformation, im Rahmen der Funkreichweite örtlich unabhängig und in Echtzeit übertragen werden können.

Ist einer vorteilhaften Ausführung des Systems ist ein autonomes, unbemanntes Transportmittel, vorzugsweise eine Drohne, zur Aufnahme und zur Führung des Videoaufnahmegeräts vorgesehen. Im konkreten Fall der Drohne weist diese den 3-Achsenstabilisator und ein GPS-Modul auf. Somit kann der von dem Videoaufnahmegerät aufgenommene monoskopische Videofilm im Wesentlichen in Echtzeit an die Datenverarbeitungseinheit übermittelt werden.

Weist dabei das System zusätzlich eine stereoskopische Anzeigeeinheit auf, die mit der Datenverarbeitungseinheit verbunden ist, kann der von der Datenverarbeitungseinheit ermittelte stereoskopische Videofilm vom Betrachter im Wesentlichen in Echtzeit angesehen werden.

In einer erfindungsgemäßen Ausführung ist die stereoskopische Anzeigeeinheit als Bildschirm eines Fernsehgerätes oder eines Computers, oder als Projektor ausgebildet, und weist eine 3D-Brille, vorzugsweise eine Virtual-Reality 3D-Brille, auf.

In einer vorteilhaften Ausführung ist die Datenverarbeitungseinheit Teil eines mobilen Telekommunikationsgeräts, beispielsweise eines Smartphones, oder eines mobilen Tablet-Computers. In Kombination mit der stereoskopischen Anzeigeeinheit, die beispielsweise aus einem Bildschirm des Geräts und einer Virtual-Reality 3D-Brille besteht, können so monoskopische Videos, die mit einem, nur ein Einzelobjektiv aufweisenden, Videoaufnahmegerät, das von einer Drohne bewegt wird, aufgenommenen wurden, in Echtzeit betrachtet werden.

In einer weiteren vorteilhaften Ausführung des Systems wird das Videoaufnahmegerät vom Betrachter oder dem Transportmittel in ortsfester Position gehalten, während ein monoskopischen 360-Grad-Videofilm aufgenommen wird. Aus dem aufgenommenen monoskopischen 360-Grad-Videofilm ermittelt die Datenverarbeitungseinheit ein stereoskopisches Panoramabild, das aus zwei inhaltlich identischen, zeitlich zueinander verzögerten monoskopischen 360-Grad-Videofilmen besteht. Dieses stereoskopische Panoramabild kann vom Betrachter mittels der stereoskopischen Anzeigeeinheit, die beispielsweise aus einem Smartphone und einer passiven Virtual-Reality 3D-Brille besteht, betrachtet werden.

In einer weiteren vorteilhaften Ausführung des Systems ist das Videoaufnahmegerät als 360-Grad-Videoaufnahmegerät ausgebildet. Dabei umfasst das 360-Grad-Videoaufnahmegerät ein Einzelobjektiv, das einen Aufnahmebereich von 360 Grad quer zur optischen Achse des Einzelobjektivs abdeckt. Vorzugsweise umfasst das 360-Grad-Videoaufnahmegerät mehrere Einzelobjektive, vorzugsweise jeweils mit einem eigenen Bildsensor. Die Datenverarbeitungseinheit ermittelt anhand der monoskopischen Videofilme und der zugeordneten Bewegungsinformationen aller Einzelobjektive den abzugebenden stereoskopischen Videofilm innerhalb der aufgenommenen 360-Grad-Umgebung. Dabei wird ein fließender Übergang zwischen den unterschiedlichen Aufnahmebereichen der Einzelobjektive ermittelt, sodass sich der Betrachter, der eine passive oder aktive Virtual-Reality 3D-Brille trägt, im Wesentlichen frei in einer stereoskopischen virtuellen Umgebung bewegen kann.

Weitere vorteilhafte Ausgestaltungen des erfindungsgemäßen Systems werden im Folgenden anhand der Figuren näher erläutert.
Figur 1 zeigt ein Blockschaltbild eines Systems zur Abgabe eines stereoskopischen Videofilms gemäß einem ersten Ausführungsbeispiel der Erfindung.
Figur 2 zeigt ein Ablaufdiagramm eines Verfahrens zur Abgabe eines stereoskopischen Videofilms gemäß der Erfindung.
Figur 3 zeigt eine erste Bewegungskomponente eines Videoaufnahmegeräts gemäß der Erfindung.
Figur 4 zeigt eine zweite Bewegungskomponente des Videoaufnahmegeräts gemäß der Erfindung.
Figur 5 zeigt eine erste Verarbeitung des Systems zur Abgabe des stereoskopischen Videofilms.
Figur 6 zeigt ein Blockschaltbild eines Systems zur Abgabe eines stereoskopischen Videofilms gemäß einem weiteren Ausführungsbeispiel der Erfindung.
Figur 7 zeigt ein Blockschaltbild eines Systems zur Abgabe eines stereoskopischen Videofilms gemäß einem weiteren Ausführungsbeispiel der Erfindung.
Figur 8 zeigt ein Blockschaltbild eines Systems zur Abgabe eines stereoskopischen Videofilms gemäß einem weiteren Ausführungsbeispiel der Erfindung.
Figur 9 zeigt ein System zur Abgabe eines stereoskopischen Panoramabildes gemäß einem weiteren Ausführungsbeispiel der Erfindung.

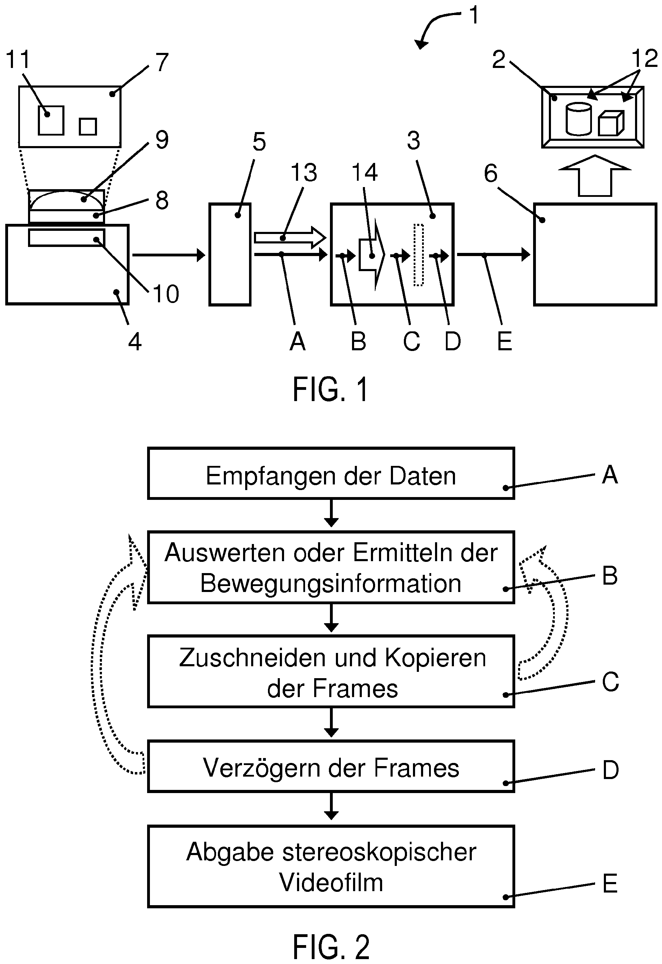

Figur 1 zeigt ein Blockschaltbild eines Systems 1 zur Abgabe eines stereoskopischen Videofilms 2, wobei das System im vorliegenden Ausführungsbeispiel eine Datenverarbeitungseinheit 3, ein Videoaufnahmegerät 4, einen Permanentspeicher 5 und eine stereoskopische Anzeigeeinheit 6 aufweist. Mit dem Videoaufnahmegerät 4 wird dabei ein monoskopischer Videofilm 7 aufgenommen. Das Videoaufnahmegerät 4 ist eine digitale Kamera mit einem Einzelobjektiv 8, einer optischen Linse 9 sowie einem Bildsensor 10. Das Videoaufnahmegerät 4 nimmt mittels der optischen Linse 9, die sich in dem Einzelobjektiv 8 befindet, sowie dem Bildsensor 10 den monoskopischen Videofilm 7 auf. Befindet sich das Videoaufnahmegerät 4 während einer Abfolge von zumindest zwei aufeinanderfolgenden Frames 21 des aufgenommenen monoskopischen Videofilms 7 in Bewegung relativ zu zumindest einem gefilmten Objekt 11, kann daraus der stereoskopische Videofilm 2 ermittelt werden. Befindet sich das Videoaufnahmegerät 4 während einer Abfolge von zumindest zwei aufeinanderfolgenden Frames 21 des aufgenommenen monoskopischen Videofilms 7 nicht in Bewegung relativ zu zumindest einem gefilmten Objekt 11, kann daraus der stereoskopische Videofilm 2 nicht ermittelt werden, und es wird während dieser Abfolge von zumindest zwei aufeinanderfolgenden Frames 21 des aufgenommenen monoskopischen Videofilms 7 der monoskopische Videofilm 7 anstelle des stereoskopischen Videofilms 2 abgegeben.

Die Bewegung des Videoaufnahmegeräts 4 sollte sich dabei zu jedem Zeitpunkt in einer stabilisierten Situation befinden, um einen stereoskopischen Effekt 12 des stereoskopischen Videofilms 2 optimal zu ermöglichen. Der aufgenommene monoskopische Videofilm 7 sollte also zu keinem Zeitpunkt "verwackelt" sein, da sonst auch der stereoskopischen Videofilm 2 "verwackelt" abgegeben wird, und ein stereoskopischer Effekt 12 vermindert wird.

Der monoskopische Videofilm 7 wird von dem Videoaufnahmegerät 4 auf den Permanentspeicher 5, beispielsweise eine Speicherkarte, übertragen.

Die Datenverarbeitungseinheit 3 empfängt in einem Verfahrensschritt A eine Bildinformation 13. Verfahrensschritt A sowie nachfolgende Verfahrensschritte B bis E sind in Figur 2 dargestellt. Aus der empfangenen Bildinformation 13 ermittelt die Datenverarbeitungseinheit 3 in Verfahrensschritt B eine dem monoskopischen Videofilm 7 zuzuordnende Bewegungsinformation 14. Diese Bewegungsinformation 14 entspricht dabei einer Bewegungsrichtung 27 des Videoaufnahmegeräts 4 relativ zu dem gefilmten Objekt 11, das von einem Videoanalyseprogramm als Referenzobjekt gewählt wird. Das Videoanalyseprogramm markiert das Referenzobjekt mit einem Punkt, und ermittelt die zeitliche Veränderung der Bewegung dieses Punktes. Wird das Referenzobjekt beispielsweise größer, bewegt sich das Videoaufnahmegerät 4 auf das Referenzobjekt zu, und umgekehrt. Verschiebt sich der Punkt von rechts nach links, bewegt sich das Videoaufnahmegerät 4 relativ zum Referenzobjekt von links nach rechts, und umgekehrt.

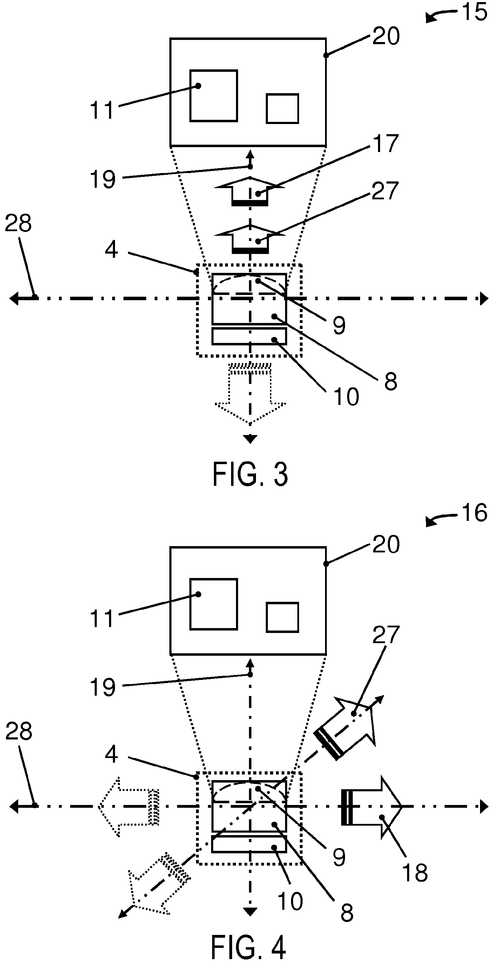

Abhängig von der ermittelten Bewegungsinformation 14 führt die Datenverarbeitungseinheit 3 eine erste 15 und eine zweite Verarbeitung 16 durch, wobei die erste Verarbeitung 15 einer ersten Bewegungskomponente 17 und die zweite Verarbeitung 16 einer zweiten Bewegungskomponente 18 zugeordnet ist. Die Figuren 3 und 4 stellen diese Bewegungsrichtungen 18 und 19 dar. Die Bewegungsrichtung 27 des Videoaufnahmegeräts 4 besteht dabei immer aus einem Anteil der ersten Bewegungskomponente 17 und einem Anteil der zweiten Bewegungskomponente 18.

Die erste Bewegungskomponente 17 ist schematisch in Figur 3 dargestellt. Dabei bewegt sich das Videoaufnahmegerät 4 in Richtung der optischen Achse des Einzelobjektivs 8 und der optischen Linse 9, entlang einer Flächennormalen 19, auf die projizierte monoskopische Bildfläche, in der das gefilmte Objekt 11 liegt, zu. Diese projizierte Bildfläche kann als parallel auf ein vom Bildsensor 10 aufgenommenes Bild 20 angesehen werden.

Liegt während einer Abfolge von zumindest zwei aufeinanderfolgenden aufgenommenen Bildern 20 der, dem monoskopischen Videofilms 7 zugeordneten, Bewegungsinformation 14 ausschließlich die erste Bewegungskomponente 17 vor, also ist der Anteil der zweiten Bewegungskomponente 18 an der Bewegungsrichtung 27 des Videoaufnahmegeräts 4 null, ermittelt die Datenverarbeitungseinheit 3 den stereoskopischen Videofilm 2 gemäß der ersten Verarbeitung 15.

Dabei bezieht sich die Bewegungsrichtung 27 des Videoaufnahmengeräts 4 immer auf das vom Bildsensor 10 aufgenommene Bild 20, das zumindest ein gefilmtes Objekt 11 aufweist. Befindet sich tatsächlich nur ein charakteristisches gefilmtes Objekt 11 im aufgenommenen Bild 20, muss zumindest ein charakteristischer Hintergrund im aufgenommenen Bild 20 vorliegen, um daraus einen stereoskopischen Frame des stereoskopischen Videofilms 2 zu ermitteln. Mehrere gefilmte Objekte 11 sind vorteilhaft für den Gebrauch der Erfindung.

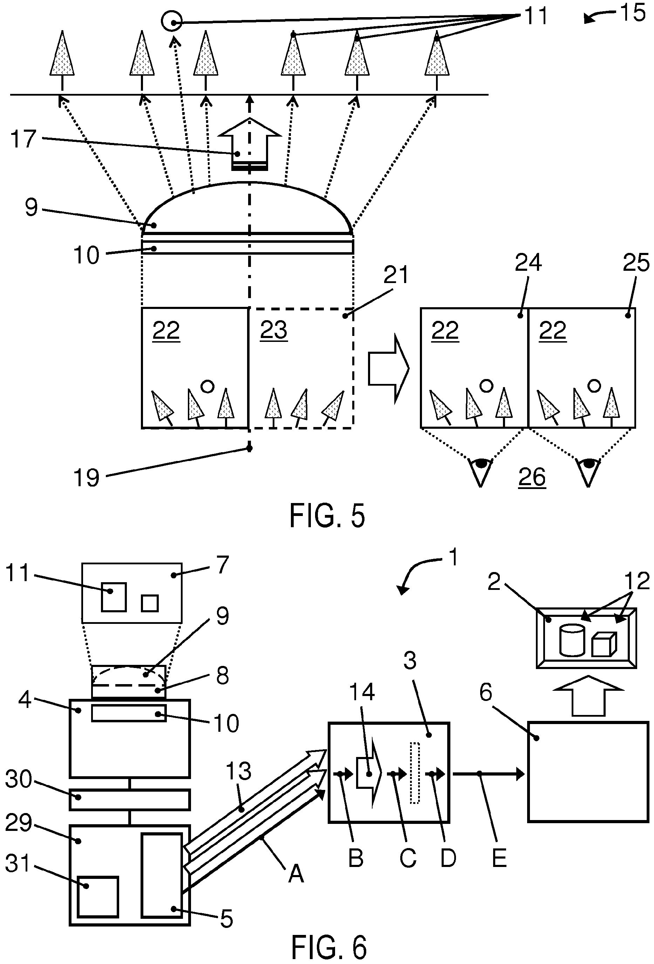

Ein Verfahrensschritt C dieser ersten Verarbeitung 15 ist in Figur 5 dargestellt. Bei der ersten Verarbeitung 15 nützt die Erfindung die Verzerrung des jeweiligen aufgenommenen Bildes 20. Das aufgenommene Bild 20 entspricht einem einzelnen aufgenommenen Frame 21 des monoskopischen Videofilms 7, der sich aus einer zeitlichen Abfolge von Frames 21 zusammensetzt. Die Verzerrung entsteht, wenn sich das Videoaufnahmegerät 4 entlang der ersten Bewegungskomponente 17 auf mehrere zu filmende Objekte zubewegt. Durch den unterschiedlichen Strahlengang des Lichts innerhalb der optischen Linse 9, sowie an deren optischen Übergängen mit der Umgebungsluft, wird jedes gefilmte Objekt 11 nach seiner Aufnahme unterschiedlich stark verzerrt abgebildet. Das im jeweiligen Frame 21 gefilmte Objekt 11 wird umso stärker verzerrt abgebildet, je weiter entfernt es sich - auf der projizierten monoskopischen Bildfläche - von der zentralen Achse der optischen Linse 9 befindet.

Bewegt sich zumindest ein gefilmtes Objekt 11 während einer Abfolge von zumindest zwei aufeinanderfolgenden Frames 21 des monoskopischen Videofilms 7, wird eine Bewegungsgeschwindigkeit des Videoaufnahmegeräts 4 entsprechend angepasst, um doppelte oder verschwommene stereoskopische Frames des abzugebenden stereoskopischen Videofilms 2 zu verhindern. Je höher hierbei die Bewegungsgeschwindigkeit des gefilmten Objektes 11 ist, desto höher muss die Bewegungsgeschwindigkeit des Videoaufnahmegeräts 4 sein.

Die Datenverarbeitungseinheit 3 wählt in dem Verfahrensschritt C entweder eine linke Hälfte 22 oder eine rechte Hälfte 23 der aufgenommenen Frames 21 des monoskopischen Videofilms 7, und schneidet diese Frames 21 auf ihre beispielsweise linken Hälften 22 zu. In einem nächsten Schritt werden die linken Hälften 22 aller dieser Frames 21 kopiert. Diese beiden Abfolgen von inhaltlich identen, zugeschnittenen Frames 21 werden folgend Seite-an-Seite, jeweils für ein linkes Auge 24 und ein rechtes Auge 25 eines Betrachters 26, zueinander verzögert, abgegeben, und bilden den stereoskopischen Videofilm 2. Im vorliegenden Beispiel werden die beiden monoskopischen Videofilme des abzugebenden stereoskopischen Videofilms 2 aus den linken Hälften 22 der Frames 21 des aufgenommenen monoskopischen Videofilms 7 gebildet.

Die Wahl, ob auf die linken Hälften 22 oder auf die rechten Hälften 23 aller Frames 21 des monoskopischen Videofilms 7 zugeschnitten wird, kann auch manuell vom Betrachter 26 getroffen werden.

In einem Verfahrensschritt D, der in Figur 5 nicht dargestellt ist, ermittelt die Datenverarbeitungseinheit 3 eine Verzögerung des monoskopischen Videofilms 7 für das linke Auge 24 oder das rechte Auge 25 des Betrachters 26 um einen bestimmten Betrag von Frames pro Sekunde. Welcher monoskopische Videofilm verzögert wird, hängt in der ersten Verarbeitung 15 davon ab, auf welche Hälften der Frames 21 in Verfahrensschritt C zugeschnitten wurde. Wurde beispielsweise auf die linken Hälften 22 zugeschnitten, wird in dem stereoskopischen Videofilm 2 der monoskopischen Videofilm für das linke Auge 24 des Betrachters 26 verzögert und der monoskopischen Videofilm für das rechte Auge 25 des Betrachters 26 unverzögert abgegeben.

Die Größe des Betrages der Verzögerung in Frames pro Sekunde hängt dabei erstens von der Bewegungsgeschwindigkeit des Videoaufnahmegeräts 4 relativ zu dem Referenzobjekt ab, und zweitens wie stark der stereoskopische Effekt 12 des stereoskopischen Videofilms 2 sein soll. Dabei ist der Betrag der Verzögerung umso größer zu wählen, je größer die Bewegungsgeschwindigkeit des Videoaufnahmegeräts 4 ist, beziehungsweise je stärker der gewünschte stereoskopische Effekt 12 sein soll. Vorzugsweise beträgt die eingestellte Verzögerung in Frames pro Sekunde zwischen einem Drittel und zwei Drittel der Aufnahmegeschwindigkeit des Videoaufnahmegeräts 4, besonders vorzugsweise die Hälfte der Aufnahmegeschwindigkeit des Videoaufnahmegeräts 4.

Die Wahl, um welchen Betrag in Frames pro Sekunde die verzögernd darzustellende Seite verzögert abgegeben werden soll, kann auch manuell vom Betrachter 26 getroffen werden.

Liegt während einer Abfolge von zumindest zwei aufeinanderfolgenden aufgenommenen Bildern 20 der, dem monoskopischen Videofilms 7 zugeordneten, Bewegungsinformation 14 ein Anteil der zweiten Bewegungskomponente 18 vor, ermittelt die Datenverarbeitungseinheit 3 den stereoskopischen Videofilm 2 gemäß der zweiten Verarbeitung 16. Dabei wird immer die zweite Verarbeitung 16 durchgeführt, sofern der Anteil der zweiten Bewegungskomponente 18 an der Bewegungsrichtung 27 des Videoaufnahmegeräts 4 nicht null ist.

Die zweite Bewegungskomponente 18 ist schematisch in Figur 4 dargestellt. Dabei bewegt sich das Videoaufnahmegerät 4 quer zur Richtung der Flächennormalen 19 auf die projizierte monoskopische Bildfläche in der das gefilmte Objekt 11 liegt, entlang einer Parallelen 28, von links nach rechts (oder von rechts nach links). Diese projizierte Bildfläche kann als parallel auf ein vom Bildsensor 10 aufgenommenes Bild 20 angesehen werden. Durch die relative Bewegung des Videoaufnahmegeräts 4 quer zu zumindest einem gefilmten Objekt 11, entsteht eine Bewegungsparallaxe. Die Bewegungsparallaxe ermöglicht die Darstellung der Position von gefilmten Objekten 11 im Raum: erstens bewegen sich gefilmte Objekte 11 - abhängig von ihrer örtlichen Entfernung von der optischen Linse 9 - für den Betrachter 26 scheinbar unterschiedlich schnell, und zweitens sieht der Betrachter 26 diese gefilmten Objekte 11 - wiederum abhängig von ihrer örtlichen Entfernung von der optischen Linse 9 - zu verschiedenen Zeitpunkten unter unterschiedlichen Blickwinkeln.

Bewegen sich mehrere gefilmte Objekte 11, während einer durchgängigen Abfolge von zumindest zwei aufeinanderfolgenden Frames 21, in die gleiche oder in unterschiedliche Richtungen, wird von der Datenverarbeitungseinheit 3 zumindest ein Referenzobjekt gewählt, anhand dessen die zugehörige Bewegungsinformation 14 des Videoaufnahmegeräts 4 ermittelt wird. Verändert sich die Bewegungsgeschwindigkeit zumindest eines gefilmten Objekts 11, während einer durchgängigen Abfolge von zumindest zwei aufeinanderfolgenden Frames 21, wird die Bewegungsgeschwindigkeit des Videoaufnahmegeräts 4 entsprechend angepasst, um doppelte oder verschwommene Bilder des abzugebenden stereoskopischen Videofilms 2 zu verhindern. Je höher hierbei die Bewegungsgeschwindigkeit des gefilmten Objekts 11 ist, desto höher muss die Bewegungsgeschwindigkeit des Videoaufnahmegeräts 4 sein.

Die Frames 21 des monoskopischen Videofilms 7 müssen in der zweiten Verarbeitung 16 nicht zugeschnitten werden. Die Datenverarbeitungseinheit 3 verdoppelt in Verfahrensschritt C alle aufgenommenen Frames 21. Diese beiden Abfolgen von inhaltlich identen Frames 21 werden folgend Seite-an-Seite, jeweils für das linke Auge 24 und das rechte Auge 25 des Betrachters 26, zueinander verzögert, abgegeben, und bilden den stereoskopischen Videofilm 2. Die beiden monoskopischen Videofilme des abzugebenden stereoskopischen Videofilms 2 werden dabei aus den Frames 21 des aufgenommenen monoskopischen Videofilms 7 gebildet.

In einer vorteilhaften Variante des erfindungsgemäßen Systems 1 werden auch in der zweiten Verarbeitung 16 alle Frames 21 entweder auf ihre linken Hälften 22 oder ihre rechten Hälfte 23 zugeschnitten. So kann für den Fall, dass die, während des monoskopischen Videofilms 7 ermittelte, Bewegungsinformation 14 des Videoaufnahmegeräts 4 sowohl die erste Verarbeitung 15 als auch die zweite Verarbeitung 16 erfordert, verhindert werden, dass sich, während der Wiedergabe des stereoskopischen Videofilms 2, die Seitenverhältnisse der beiden monoskopischen Videofilme jeweils für das linkes Auge 24 und das rechte Auge 25 des Betrachters 26 ändern.

Allerdings wird bei der zweiten Verarbeitung 16, im Unterschied zu ersten Verarbeitung 15, die Verzögerung des monoskopischen Videofilms 7 für das linke Auge 24 oder das rechte Auge 25 des Betrachters 26 anhand der relativen Bewegungsrichtung 27 des Videoaufnahmegeräts 4 zum Referenzobjekt bestimmt. Bewegt sich das Videoaufnahmegeräts 4 beispielsweise relativ zum Referenzobjekt von links nach rechts, wird in dem stereoskopischen Videofilm 2 der monoskopischen Videofilm für das linke Auge 24 des Betrachters 26 verzögert und der monoskopischen Videofilm für das rechte Auge 25 des Betrachters 26 unverzögert abgegeben.

Die Größe des Betrages der Verzögerung in Frames pro Sekunde hängt auch in der zweiten Verarbeitung 16 erstens von der Bewegungsgeschwindigkeit des Videoaufnahmegeräts 4 relativ zum Referenzobjekt ab, und zweitens wie stark der stereoskopische Effekt 12 des stereoskopischen Videofilms 2 sein soll. Dabei ist der Betrag der Verzögerung umso größer zu wählen, je größer die Bewegungsgeschwindigkeit des Videoaufnahmegeräts 4 relativ zum Referenzobjekt ist, beziehungsweise wir stark der gewünschte stereoskopische Effekt 12 sein soll. Vorzugsweise beträgt die eingestellte Verzögerung in Frames pro Sekunde zwischen einem Drittel und zwei Drittel der Aufnahmegeschwindigkeit des Videoaufnahmegeräts 4, besonders vorzugsweise die Hälfte der Aufnahmegeschwindigkeit des Videoaufnahmegeräts 4.

Die Wahl, ob der monoskopischen Videofilm für das linke Auge 24 des Betrachters 26 oder der monoskopischen Videofilm für das rechte Auge 25 des Betrachters 26 um einen bestimmten Betrag in Frames pro Sekunde verzögert abgegeben werden soll, kann auch manuell vom Betrachter 26 getroffen werden.

Als letzter Verfahrensschritt E wird der, in den Verfahrensschritten A bis D ermittelte, stereoskopische Videofilm 2 von der Datenverarbeitungseinheit 3 an die stereoskopische Anzeigeinheit 6 abgegeben. Die stereoskopische Anzeigeinheit 6 besteht in der erfindungsgemäßen Ausführung aus einem Bildschirm eines Fernsehgerätes oder eines Computers, oder aus einem Projektor, und einer 3D-Brille, vorzugsweise einer Virtual-Reality 3D-Brille.

Figur 6 zeigt ein Blockschaltbild des erfindungsgemäßen Systems 1 zur Abgabe des stereoskopischen Videofilms 2 gemäß einem weiteren Ausführungsbeispiel der Erfindung. Das System 1 weist, zusätzlich zu dem in Figur 1 dargestellten Ausführungsbeispiel, ein autonomes, unbemanntes Transportmittel 29, vorzugsweise eine Drohne, auf. Das Transportmittel 29 dient zur Aufnahme und zur Führung des Videoaufnahmegeräts 4. Damit der aufgenommene monoskopische Videofilm 7 nicht "verwackelt" erscheint, ist das Videoaufnahmegerät 4 über einen 3-Achsenstabilisator 30 an dem Transportmittel 29 befestigt. Das Transportmittel 29 weist weiters ein GPS-Modul 31 auf, damit die dem monoskopischen Videofilm 7 zugeordnete Bewegungsinformation 14 automatisch ermittelt werden kann. Die Bildinformation 13 und die, dem monoskopischen Videofilm 7 zuzuordnende Bewegungsinformation, werden auf dem Permanentdatenspeicher 5, vorzugsweise einer Speicherkarte, gespeichert. Die Datenverarbeitungseinheit 3 empfängt die Daten von dem Permanentdatenspeicher 5 und wertet daraus die dem monoskopischen Videofilm 7 zugeordnete Bewegungsinformation 14 aus. In weiterer Folge verfährt die Datenverarbeitungseinheit 3 wie im vorangegangenen Ausführungsbeispiel beschrieben.

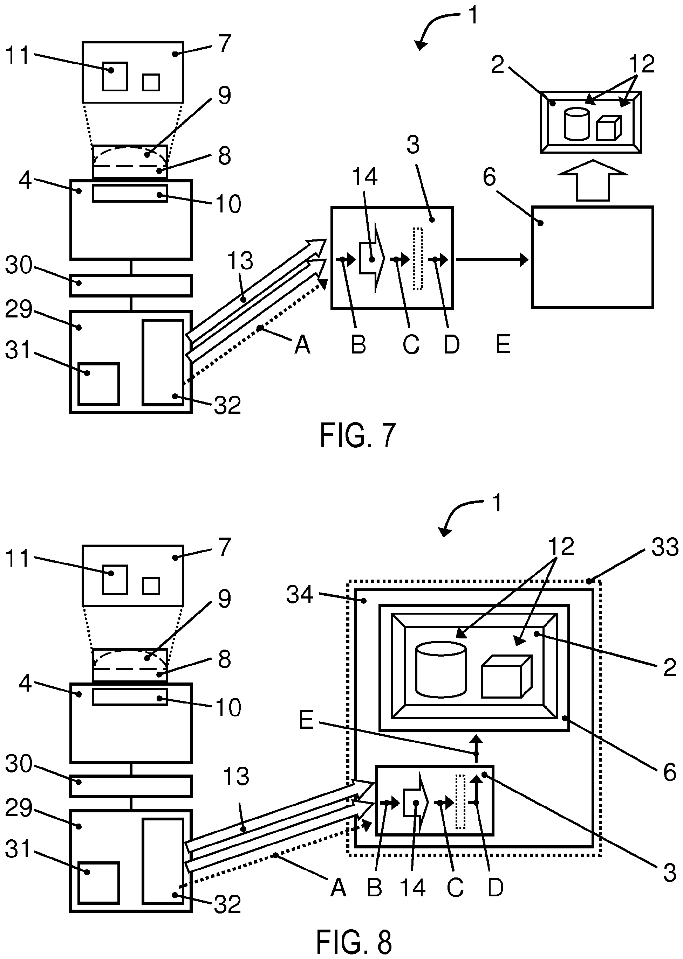

Figur 7 zeigt ein Blockschaltbild des erfindungsgemäßen Systems 1, ähnlich dem in Figur 6 dargestellten Ausführungsbeispiel, wobei das Transportmittel 29, anstatt des Permanentspeichers 5, eine Datenkommunikationseinheit 32 aufweist. Die Datenkommunikationseinheit 32 führt eine drahtlose Übertragung der Bildinformation 13 und der, dem monoskopischen Videofilm 7 zuzuordnenden, Bewegungsinformation 14 an die Datenverarbeitungseinheit 3, die einen entsprechenden Empfänger aufweist, durch. Im Rahmen der Funkreichweite der Datenkommunikationseinheit 32 werden die Daten im Wesentlichen in Echtzeit an die Datenverarbeitungseinheit 3 übertragen. Die Datenverarbeitungseinheit 3 empfängt die Daten und wertet daraus die dem monoskopischen Videofilm 7 zugeordnete Bewegungsinformation 14 aus. In weiterer Folge verfährt die Datenverarbeitungseinheit 3 wie im, in Figur 1 dargestellten, Ausführungsbeispiel beschrieben.

Figur 8 zeigt ein Blockschaltbild des erfindungsgemäßen Systems 1, ähnlich dem in Figur 7 dargestellten Ausführungsbeispiel, wobei ein mobiles Telekommunikationsgerät 33, vorzugsweise ein Smartphone oder mobiler Tablet-Computer, die Datenverarbeitungseinheit 3 und den Bildschirm der stereoskopischen Anzeigeeinheit 6 in einem Gehäuse 34 aufweist. Die Datenverarbeitungseinheit 3 des mobilen Telekommunikationsgeräts 33 empfängt die Bildinformation 13 und die, dem monoskopischen Videofilm 7 zuzuordnende, Bewegungsinformation von der Datenkommunikationseinheit 32 des Transportmittels 29, und wertet daraus die dem monoskopischen Videofilm 7 zugeordnete Bewegungsinformation 14 aus. In weiterer Folge verfährt die Datenverarbeitungseinheit 3 wie im, in Figur 1 dargestellten, Ausführungsbeispiel beschrieben. Mit einer 3D-Brille kann der Betrachter 26 den stereoskopischen Videofilm 2 direkt auf dem mobilen Telekommunikationsgerät 33 ansehen.

In einer vorteilhaften Variante des erfindungsgemäßen Systems 1 integriert der Betrachter 26 das Telekommunikationsgerät 33 direkt in eine Virtual-Reality 3D-Brille. Der Betrachter 26 kann so mittels des in Figur 8 dargestellten Systems 1, den stereoskopischen Videofilm 2, der von der Datenverarbeitungseinheit 3 aus dem von dem Videoaufnahmegerät 4 aufgenommenen monoskopischen Videofilm 7 ermittelt wird, im Wesentlichen in Echtzeit ansehen.

In einer vorteilhaften Variante der in den Figuren 6 bis 8 dargestellten Ausführungsbeispiele des Systems 1, besteht die dem monoskopischen Videofilm 7 zugeordnete Bewegungsinformation 14, die das Transportmittel 29 speichert oder überträgt, aus der Bewegungsrichtung 27 des Videoaufnahmegeräts 4 relativ zu dem gefilmten Objekt 11, sowie der Bewegungsgeschwindigkeit und der Aufnahmegeschwindigkeit des Videoaufnahmegeräts 4. Hierdurch kann die Datenverarbeitungseinheit 3, nach dem Empfangen dieser Daten in Verfahrensschritt A, automatisch die Verfahrensschritte B bis D durchführen, sodass in Verfahrensschritt E ein optimaler stereoskopischer Videofilm 2 an die stereoskopische Anzeigeeinheit 6 abgegeben werden kann.

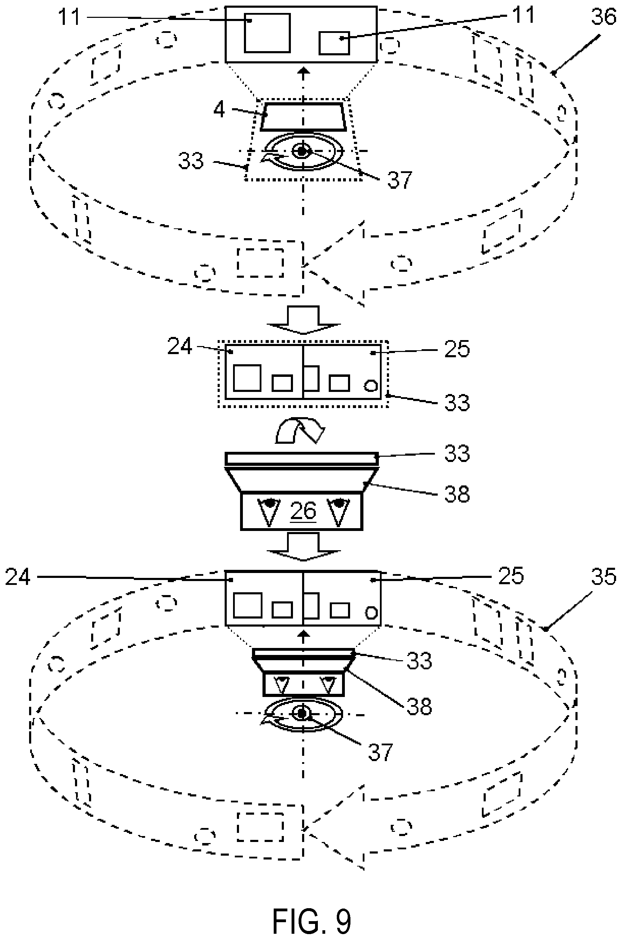

Figur 9 zeigt ein weiteres vorteilhaftes Ausführungsbeispiel der Erfindung. Dabei dient das System 1 zur Abgabe eines stereoskopischen Panoramabildes 35. Hierbei wird das Videoaufnahmegerät 4 vom Betrachter 26 oder dem Transportmittel 29 in ortsfester Position, also bei gleichbleibenden Orts-Koordinaten, gehalten, während das Videoaufnahmegerät 4 einen monoskopischen 360-Grad-Videofilm 36 aufnimmt. Dabei wird das Videoaufnahmegerät 4 volle 360 Grad um seine eigene Achse 37 rotiert. Die eigene Achse 37 ist dabei im Wesentlichen normal auf die Erdoberfläche, und die 360-Grad-Drehung wird dabei im Wesentlichen parallel zur Erdoberfläche durchgeführt. Im vorliegenden Beispiel ist das Videoaufnahmegerät 4 als Telekommunikationsgerät 33, beziehungsweise als Smartphone, ausgeführt, das vom Betrachter 26 mittels ausgestreckten Armen geführt wird. Aus dem aufgenommenen monoskopischen 360-Grad-Videofilm 36 ermittelt die Datenverarbeitungseinheit 3 zwei inhaltlich identische, zeitlich zueinander verzögerte monoskopische 360-Grad-Videofilme, die dann Seite-an-Seite das stereoskopisches Panoramabild 35 ausbilden. Die verzögerte Abgabe des monoskopischen 360-Grad-Videofilm für das linke Auge 24, beziehungsweise für das rechte Auge 25, des Betrachters 26 wird gemäß der der zweiten Verarbeitung 16 ermittelt. Führt der Betrachter 26 das Videoaufnahmegerät 4 von links nach rechts, also im Uhrzeigersinn, wird der monoskopische 360-Grad-Videofilm 36 für das linke Auge 24 verzögert abgegeben; führt der Betrachter 26 das Videoaufnahmegerät 4 von rechts nach links, also gegen den Uhrzeigersinn, wird der monoskopische 360-Grad-Videofilm 36 für das rechte Auge 25 verzögert abgegeben. Das stereoskopische Panoramabild 35 kann vom Betrachter 26 mittels der stereoskopischen Anzeigeeinheit 6, die im vorliegenden Beispiel aus dem Telekommunikationsgerät 33 und einer passiven Virtual-Reality 3D-Brille 38, in die das Smartphone als Anzeige eingesetzt wird, besteht, betrachtet werden. Dabei umfasst die passive Virtual-Reality 3D-Brille 38 ein Gehäuse und zwei optische Linsen, welche die Blickrichtung des linken Auges, beziehungsweise die Blickrichtung des rechten Auges, des Betrachters 26 jeweils auf den monoskopischen 360-Grad-Videofilm für das linke Auge 24, beziehungsweise für das rechte Auge 25, des Betrachters 26 richten. Bewegt der Betrachter 26 den Kopf, und damit die passive Virtual-Reality 3D-Brille 38, erkennt ein Gyroskop des Telekommunikationsgeräts 33 diese Bewegung, und die Datenverarbeitungseinheit 3 gibt die beiden monoskopische 360-Grad-Videofilme des stereoskopischen Panoramabildes 35, entsprechend der Bewegungsrichtung und der Bewegungsgeschwindigkeit der Virtual-Reality 3D-Brille 38, ab. Die Geschwindigkeit der Abgabe entspricht dabei genau der Bewegungsgeschwindigkeit der passiven Virtual-Reality 3D-Brille 38. So erscheinen die beiden abgegebenen monoskopischen 360-Grad-Videofilme dem Betrachter 26 als stereoskopisches Panoramabild 35.

In einer vorteilhaften Ausführung trägt er Betrachter 26 eine aktive Virtual-Reality 3D-Brille, welche die Anzeige und das Gyroskop in ihrem Gehäuse aufweist. So kann der Betrachter 26 das stereoskopische Panoramabild 35 auch ohne ein Telekommunikationsgerät 33 betrachten, sofern die aktive Virtual-Reality 3D-Brille das stereoskopische Panoramabild 35 von der Datenverarbeitungseinheit 3 empfängt, oder diese Datenverarbeitungseinheit 3 im Gehäuse aufweist.

In einer weiteren vorteilhaften Ausführung des Systems 1 ist das Videoaufnahmegerät 4 als 360-Grad-Videoaufnahmegerät ausgebildet. Dabei umfasst das 360-Grad-Videoaufnahmegerät ein Einzelobjektiv 8, das einen Aufnahmebereich von 360 Grad im dreidimensionalen Raum, horizontal und vertikal quer zur optischen Achse des Einzelobjektivs 8, abdeckt. Dieser Aufnahmebereich entspricht einer Kugeloberfläche. Vorzugsweise umfasst das 360-Grad-Videoaufnahmegerät mehrere Einzelobjektive 8, jeweils mit einem eigenen Bildsensor 10, besonders vorzugsweise umfasst das 360-Grad-Videoaufnahmegerät zumindest vier Einzelobjektive 8 jeweils mit einem eigenen Bildsensor 10. Die mehreren Einzelobjektive 8 decken jeweils einen Aufnahmebereich von zumindest 360 Grad geteilt durch die Anzahl aller vorhandenen Einzelobjektive 8, horizontal und vertikal quer zur optischen Achse des jeweiligen Einzelobjektivs, 8 ab. Das Videoaufnahmegerät 4 bewegt sich während der Aufnahme des monoskopischen Videofilms 7, welcher aus den einzelnen Teilen der, von den Einzelobjektiven 8 aufgenommenen, monoskopischen Videofilmen besteht.

Liegt beispielsweise eine Ausführung des Systems 1 laut Figur 6 vor, wobei das Videoaufnahmegerät 4 als 360-Grad-Videoaufnahmegerät ausgebildet ist, kann die Datenverarbeitungseinheit 3 nach dem Empfangen der Daten in Verfahrensschritt A, automatisch die Verfahrensschritte B bis D durchführen, sodass in Verfahrensschritt E ein stereoskopischer Videofilm 2 an die stereoskopische Anzeigeeinheit 6 abgegeben werden kann. In den Verfahrensschritten B bis D ermittelt die Datenverarbeitungseinheit 3 anhand der monoskopischen Videofilme 7, und der den jeweiligen monoskopischen Videofilmen 7 zugeordneten Bewegungsinformationen 14 aller Einzelobjektive 8, die abzugebenden stereoskopischen Videofilme 2 aller Einzelobjektive 8. Dabei kann ein fließender Übergang zwischen den unterschiedlichen Aufnahmebereichen der Einzelobjektive 8 ermittelt werden, sodass eine vollkommene virtuelle stereoskopische 360-Grad-Umgebung in alle Raumachsen, also ein virtueller stereoskopischer Raum in Form einer Kugel, entsteht.

Trägt der Betrachter 26 eine passive oder aktive Virtual-Reality 3D-Brille 38 und bewegt seinen Blick innerhalb der virtuellen 360-Grad-Umgebung, wählt die Datenverarbeitungseinheit 3 laut der Bewegung des Betrachters 26 den, dieser Bewegung entsprechenden, stereoskopischen Videofilm 2 des, dieser Blickrichtung zugehörigen, Einzelobjektivs 8. So kann der Betrachter 26 seinen Blick im Wesentlichen frei in einer stereoskopischen virtuellen Umgebung bewegen. Der Betrachter 26 sieht dabei, während der Abgabe des stereoskopischen Videofilms 2, jeweils den Teil der virtuellen Kugeloberfläche, der seiner Blickrichtung, beziehungsweise der Raumrichtung der passiven oder aktiven Virtual-Reality 3D-Brille 38, entspricht. Der Betrachter 26 selbst "folgt dabei in seiner virtuellen Bewegung" der Bewegungsrichtung des Videoaufnahmegeräts 4 während der Aufnahme des monoskopischen Videofilms 7.

Es kann erwähnt werden, dass das erfindungsgemäße System 1 auch für die Abgabe eines stereoskopischen Bildes aus dem monoskopischen Videofilm 7 geeignet ist. Hierbei besteht das stereoskopische Bild aus zwei (einem linken für das linke Auge 24 des Betrachters 26 und einem rechten für das rechte Auge 25 des Betrachters 26) Seite-an-Seite abgegebenen Bildern. Das stereoskopische Bild wird hierbei durch einen sogenannten "Screenshot" aus dem stereoskopischen Videofilm 2 erzeugt, das heißt es wird ein bestimmter Frame des ermittelten stereoskopischen Videofilms 2 an die stereoskopische Anzeigeeinheit 6 abgegeben.

## Patentansprüche

1. System (1) zur Abgabe eines stereoskopischen Videofilms (2), wobei das System (1) eine Datenverarbeitungseinheit (3) aufweist, die zum Empfang und zur Verarbeitung von einem monoskopischen Videofilm (7), und zur Abgabe des stereoskopischen Videofilms (2) ausgebildet ist, wobei der monoskopische Videofilm (7) mit einem, nur ein Einzelobjektiv (8) aufweisenden, Videoaufnahmegerät (4) des Systems (1) aufgenommenen wurde, wobei die Datenverarbeitungseinheit (3) zum Empfangen einer dem monoskopischen Videofilm (7) zugeordneten Bewegungsinformation (14), oder zum Ermitteln der, dem monoskopischen Videofilm (7) zuzuordnenden Bewegungsinformation (14), und zum Auswerten der empfangenen oder ermittelten Bewegungsinformation (14) ausgebildet ist, die eine Bewegungsrichtung (27) des Videoaufnahmegeräts (4) relativ zu einem gefilmten Objekt (11) kennzeichnet, wobei die Datenverarbeitungseinheit (3) zum Erstellen des stereoskopischen Videofilms (2) aus zwei inhaltlich identischen, zeitlich zueinander verzögerten monoskopischen Videofilmen ausgebildet ist,
**dadurch gekennzeichnet, dass**
die Datenverarbeitungseinheit (3) beim Vorhandensein einer ersten Bewegungskomponente (17) des Videoaufnahmegeräts (4) in Richtung der optischen Achse des Einzelobjektivs (8) während einer Abfolge von zumindest zwei aufeinanderfolgenden Frames (21) nur die linke Hälfte (22) oder nur die rechte Hälfte (23) der Frames (21) des monoskopischen Videofilms (7) zur Darstellung der inhaltlich identischen, zeitlich zueinander verzögerten monoskopischen Videofilme als stereoskopischen Videofilm auswählt.

2. System (1) gemäß Anspruch 1, **dadurch gekennzeichnet, dass** eine zweite Bewegungskomponente (18) des Videoaufnahmegeräts (4) quer zur Richtung der optischen Achse des Einzelobjektivs (8) ermittelt wird, wobei die Datenverarbeitungseinheit (3), beim Vorhandensein ausschließlich der ersten Bewegungskomponente (17) während einer Abfolge von zumindest zwei aufeinanderfolgenden Frames (21), zum Ermitteln des stereoskopischen Videofilms (2) gemäß einer ersten Verarbeitung (15) und, beim Vorhandensein der zweiten Bewegungskomponente (18) während einer Abfolge von zumindest zwei aufeinanderfolgenden Frames (21), zum Ermitteln des stereoskopischen Videofilms (2) gemäß einer zweiten Verarbeitung (16) ausgebildet ist.

3. System (1) gemäß Anspruch 2, **dadurch gekennzeichnet, dass** die Datenverarbeitungseinheit (3) bei der ersten Verarbeitung (15) bei ausgewählter linker Hälfte (22), beziehungsweise bei ausgewählter rechter Hälfte (23), der Frames (21) des monoskopischen Videofilms (7), zum verzögerten Abgeben des monoskopischen Videofilms für das linke Auge (24), beziehungsweise für das rechte Auge (25), des Betrachters (26) des stereoskopischen Videofilms (2), und zum unverzögerten Abgeben des monoskopischen Videofilms für das rechte Auge (25), beziehungsweise für das linke Auge (24), des Betrachters (26) des stereoskopischen Videofilms (2) ausgebildet ist.

4. System (1) gemäß Anspruch 2, **dadurch gekennzeichnet, dass** die Datenverarbeitungseinheit (3) bei der zweiten Verarbeitung (16) bei Vorliegen einer zweiten Bewegungskomponente (18), die einer relativen Bewegung des Videoaufnahmegeräts (4) zum gefilmten Objekt (11) von links nach rechts, beziehungsweise von rechts nach links, entspricht, zum verzögerten Abgeben des monoskopischen Videofilms für das linke Auge (24), beziehungsweise für das rechte Auge (25), des Betrachters (26) des stereoskopischen Videofilms (2), und zum unverzögerten Abgeben des monoskopischen Videofilms für das rechte Auge (25), beziehungsweise für das linke Auge (24), des Betrachters (26) des stereoskopischen Videofilms (2) ausgebildet ist.

5. System (1) gemäß einem der vorhergehenden Ansprüche, **dadurch gekennzeichnet, dass** die dem monoskopischen Videofilm (7) zugeordnete Bewegungsinformation (14) die Bewegungsrichtung (27) des Videoaufnahmegeräts (4) relativ zu dem gefilmten Objekt (11), eine Bewegungsgeschwindigkeit des Videoaufnahmegeräts (4) und eine Aufnahmegeschwindigkeit des Videoaufnahmegeräts (4) kennzeichnet.

6. System (1) gemäß einem der vorhergehenden Ansprüche, **dadurch gekennzeichnet, dass** die Datenverarbeitungseinheit (3) zum Erstellen des stereoskopischen Videofilms (2) aus zwei inhaltlich identischen, zeitlich zueinander verzögerten monoskopischen Videofilmen ausgebildet ist, wobei die Auswahl der verzögerten Abgabe für entweder das linke Auge (24) oder das rechte Auge (25) des Betrachters (26) sowie der Betrag des zeitlichen Ausmaßes dieser verzögerten Abgabe manuell durchführbar ist.

7. System (1) gemäß einem der vorhergehenden Ansprüche, wobei das System (1) das Videoaufnahmegerät (4) aufweist, an dem ein 3-Achsenstabilisator (30) vorgesehen ist, der zum Stabilisieren des Videoaufnahmegeräts (4) während der Aufnahme des monoskopischen Videofilms (7) ausgebildet ist.

8. System (1) gemäß einem der vorhergehenden Ansprüche, wobei das System (1) einen Permanentdatenspeicher (5), der zum Speichern des mit dem Videoaufnahmegerät (4) aufgenommenen monoskopischen Videofilms (7) ausgebildet ist, oder eine Datenkommunikationseinheit (32), die zur drahtlosen Kommunikation des aufgenommenen monoskopischen Videofilms (7) und der dem monoskopischen Videofilm (7) zugeordneten Bewegungsinformation (14) ausgebildet ist, aufweist.

9. System (1) gemäß Anspruch 7, **dadurch gekennzeichnet, dass** ein autonomes, unbemanntes Transportmittel (29), vorzugsweise eine Drohne, zur Aufnahme und zur Führung des Videoaufnahmegeräts (4) vorgesehen ist, wobei das autonome, unbemannte Transportmittel (29) den 3-Achsenstabilisator (30) und ein GPS-Modul (31) aufweist.

10. System (1) gemäß einem der vorhergehenden Ansprüche, wobei das System (1) eine stereoskopische Anzeigeeinheit (6) aufweist, die mit der Datenverarbeitungseinheit (3) verbunden und zum Anzeigen des stereoskopischen Videofilms (2) ausgebildet ist, wobei die stereoskopische Anzeigeeinheit (6) als Bildschirm eines Fernsehgerätes oder eines Computers, oder als Projektor ausgebildet ist, und eine 3D-Brille, vorzugsweise eine aktive oder passive Virtual-Reality 3D-Brille, aufweist.

11. System (1) gemäß einem der vorhergehenden Ansprüche, **dadurch gekennzeichnet, dass** die Datenverarbeitungseinheit (3) als mobiles Telekommunikationsgerät (33), wie beispielsweise ein Smartphone, oder als mobiler Tablet-Computer ausgebildet ist, wobei die Datenverarbeitungseinheit (3) gemeinsam mit dem Bildschirm der stereoskopischen Anzeigeeinheit (6) in einem Gehäuse (34) vorgesehen ist.

12. System (1) gemäß Anspruch 10, **dadurch gekennzeichnet, dass** das Videoaufnahmegerät (4) in ortsfester Position, durch eine, zur Erdoberfläche im Wesentlichen parallele, volle 360-Grad-Drehung um eine, zur Erdoberfläche normale, Achse, zur Aufnahme eines monoskopischen 360-Grad-Videofilms (36) ausgebildet ist, wobei die Datenverarbeitungseinheit (3) zum Ermitteln eines stereoskopischen Panoramabildes (35) aus zwei inhaltlich identischen, zeitlich zueinander verzögerten monoskopischen 360-Grad-Videofilmen ausgebildet ist, wobei die Abgabe des stereoskopischen Panoramabildes (35) gemäß der Bewegungsrichtung und der Bewegungsgeschwindigkeit der 3D-Brille (38) des Betrachters (26) erfolgt.

13. System (1) gemäß einem der vorhergehenden Ansprüche, **dadurch gekennzeichnet, dass** das Videoaufnahmegerät (4) als 360-Grad-Videoaufnahmegerät ausgebildet ist, wobei das 360-Grad-Videoaufnahmegerät ein Einzelobjektiv (8), das einen Aufnahmebereich von 360 Grad quer zur optischen Achse des Einzelobjektivs (8) abdeckt, aufweist.

14. Verfahren zur Herstellung eines stereoskopischen Videofilms (2) aus einem, mit einem, nur ein Einzelobjektiv (8) aufweisenden, Videoaufnahmegerät (4) aufgenommenen, monoskopischen Videofilm (7), aufweisend die Verfahrensschritte:
A) Empfangen des monoskopischen Videofilms (7) und gegebenenfalls einer dem monoskopischen Videofilm (7) zugeordneten Bewegungsinformation (14);
B) Auswerten oder Ermitteln der dem monoskopischen Videofilm (7) zugeordneten Bewegungsinformation (14), die eine Bewegungsrichtung (27) des Videoaufnahmegeräts (4) relativ zu einem gefilmten Objekt (11) kennzeichnet, wobei beim Vorhandensein einer ersten Bewegungskomponente (17) des Videoaufnahmegeräts (4) in Richtung der optischen Achse des Einzelobjektivs (8) während einer Abfolge von zumindest zwei aufeinanderfolgenden Frames (21) in einem nachfolgenden Verfahrens schritt C) nur die linke Hälfte (22) oder nur die rechte Hälfte (23) der Frames (21) des monoskopischen Videofilms (7) ausgewählt wird;
C) Ermitteln zweier, inhaltlich identischer, monoskopischer Videofilme des abzugebenden stereoskopischen Videofilms (2) aus dem monoskopischen Videofilm (7);
D) Verzögern eines der beiden monoskopischen Videofilme des abzugebenden stereoskopischen Videofilms (2);

15. Verfahren gemäß Anspruch 14, dadruch gekennzeichnet, dass, nach dem Verfahrensschritt D), in einem Verfahrensschritt E) die Abgabe des in den Verfahrensschritten A)-D) hergestellten stereoskopischen Videofilms (2) an eine stereoskopische Anzeigeeinheit (6) erfolgt.

## Claims

1. A system (1) for releasing a stereoscopic video film (2), wherein the system (1) comprises a data processing unit (3) configured to receive and process a monoscopic video film (7) and to release the stereoscopic video film (2), wherein the monoscopic video film (7) has been recorded using a video recording device (4) of the system (1) having only a single objective (8), wherein the data processing unit (3) is configured to receive a motion information (14) allocated to the monoscopic video film (7) or to determine the motion information (14) to be allocated to the monoscopic video film (7) and to evaluate the received or identified motion information (14) characterizing a motion direction (27) of the video recording device (4) in regard to a filmed object (11), wherein the data processing unit (3) is configured to generate a stereoscopic video film (2) from two content-identical and temporally delayed monoscopic video films, **characterized in that** the data processing unit (3), on the availability of a first motion component (17) of the video recording device (4) in the direction of the optical axis of the single objective (8) during a sequence of at least two successive frames (21), will select only the left half (22) or only the right half (23) of the frames (21) of the monoscopic video film (7) for the presentation of the content-identical and temporally delayed monoscopic video films as a stereoscopic video film.

2. A system (1) according to claim 1, **characterized in that** a second motion component (18) of the video recording device (4) is determined transversely to the direction of the optical axis of the single objective (8), wherein the data processing unit (3), on the availability of exclusively the first motion component (17) during a sequence of at least two consecutive frames (21), is configured to determine the stereoscopic video film (2) according to a first processing (15) and, on the availability of the second motion component (18) during a sequence of at least two successive frames (21), to determine the stereoscopic video film (2) according to a second processing (16).

3. A system (1) according to claim 2, **characterized in that** the data processing unit (3) in the first processing (15), when having selected the left half (22), or when having selected the right half (23), respectively, of the frames (21) of the monoscopic video film (7), is configured to release with delay the monoscopic video film for the left eye (24), or for the right eye (25), respectively, of the viewer (26) of the stereoscopic video film (2), and to release without delay the monoscopic video film for the right eye (25), or for the left eye (24), respectively, of the viewer (26) of the stereoscopic video film (2).

4. A system (1) according to claim 2, **characterized in that** the data processing unit (3) in the second processing (16), on the availability of a second motion component (18) corresponding to a relative motion of the video recording device (4) towards the filmed object (11) from the left to the right, or from the right to the left, respectively, is configured to release with delay the monoscopic video film for the left eye (24), or for the right eye (25), respectively, of the viewer (26) of the stereoscopic video film (2), and to release without delay the monoscopic video film for the right eye (25), or for the left eye (24), respectively, of the viewer (26) of the stereoscopic video film (2).

5. A system (1) according to any of the preceding claims, **characterized in that** the motion information (14) allocated to the monoscopic video film (7) characterizes the motion direction (27) of the video recording device (4) in regard to the filmed object (11), a motion speed of the video recording device (4) and a recording rate of the video recording device (4).

6. A system (1) according to any of the preceding claims, **characterized in that** the data processing unit (3) is configured to generate the stereoscopic video film (2) from two content-identical and temporally delayed monoscopic video films, wherein the selection of the delayed release for either the left eye (24) or the right eye (25) of the viewer (26) as well as the amount of the temporal extent of this delayed release may be performed manually.

7. A system (1) according to any of the preceding claims, wherein the system (1) comprises the video recording device (4), at which there is provided a 3-axis-stabilisator (30), which is configured to stabilize the video recording device (4) during the recording of the monoscopic video film (7).

8. A system (1) according to any of the preceding claims, wherein the system (1) comprises a non-volatile storage (5), which is configured to store the monoscopic video film (7) recorded using the video recording device (4), or a data communication unit (32), which is configured to communicate the recorded monoscopic video film (7) and the motion information (14) allocated to the monoscopic video film (7) in a wireless way.

9. A system (1) according to claim 7, **characterized in that** there is provided an autonomous, unmanned transport means (29), preferably a drone, for recording and for guiding the video recording device (4), wherein the autonomous, unmanned transport means (29) has the 3-axis-stabilisator (30) and a GPS module (31).

10. A system (1) according to any of the preceding claims, wherein the system (1) comprises a stereoscopic display unit (6), which is connected to the data processing unit (3) and which is configured to display the stereoscopic video film (2), wherein the stereoscopic display unit (6) is configured as a screen of a TV set or a computer, or as a projector, and has 3D glasses, preferably active or passive virtual reality 3D glasses.

11. A system (1) according to any of the preceding claims, **characterized in that** the data processing unit (3) is configured as a mobile telecommunication device (33) such as, e.g., a smart phone, or as a mobile tablet computer, wherein the data processing unit (3) is provided in a housing (34) together with the screen of the stereoscopic display unit (6).

12. A system (1) according to claim 10, **characterized in that** the video recording device (4) is configured to record a monoscopic 360-degrees-video film (36) in an stationary position by means of a full 360-degrees-rotation essentially in parallel to the earth surface about an axis perpendicular to the earth surface, wherein the data processing unit (3) is configured to determine a stereoscopic panoramic image (35) from two content-identical and temporally delayed monoscopic 360-degrees-video films, wherein the release of the stereoscopic panoramic image (35) is realized according to the motion direction and the motion speed of the 3D glasses (38) of the viewer (26).

13. A system (1) according to any of the preceding claims, **characterized in that** the video recording device (4) is configured as a 360-degrees-video recording device, wherein the 360-degrees-video recording device has a single objective (8), which covers a recording area of 360 degrees transversely to the optical axis of the single objective (8).

14. A method of producing a stereoscopic video film (2) from a monoscopic video film (7) that has been recorded using a video recording device (4) having only a single objective (8), comprising the process steps of:
A) receiving the monoscopic video film (7) and optionally a motion information (14) allocated to the monoscopic video film (7);
B) evaluating or determining the motion information (14) allocated to the monoscopic video film (7), which characterizes a motion direction (27) of the video recording device (4) in regard to a filmed object (11), wherein, on the availability of a first motion component (17) of the video recording device (4) in the direction of the optical axis of the single objective (8) during a sequence of at least two successive frames (21), only the left half (22) or only the right half (23) of the frames (21) of the monoscopic video film (7) will be selected in a subsequent process step (C);
C) determining two content-identical monoscopic video films of the stereoscopic video film (2) to be released from the monoscopic video film (7);
D) delaying one of the two monoscopic video films of the stereoscopic video film (2) to be released.

15. A method according to claim 14, **characterized in that**, following process step D), the release of the stereoscopic video film (2) produced in process steps A)-D) to a stereoscopic display unit (6) occurs in a process step E).

## Revendications

1. Système (1) de diffusion d'un film vidéo stéréoscopique (2), le système (1) comprenant une unité de traitement de données (3) qui est réalisée pour la réception et le traitement d'un film vidéo monoscopique (7) et pour la diffusion du film vidéo stéréoscopique (2), le film vidéo monoscopique (7) ayant été enregistré par un appareil d'enregistrement vidéo (4) du système (1) qui ne comprend qu'un objectif individuel (8),
dans lequel
l'unité de traitement de données (3) est réalisée pour recevoir une information de mouvement (14) associée au film vidéo monoscopique (7) ou pour déterminer l'information de mouvement (14) à associer au film vidéo monoscopique (7) et pour évaluer l'information de mouvement (14) reçue ou déterminée, information qui caractérise une direction de mouvement (27) de l'appareil d'enregistrement vidéo (4) par rapport à un objet filmé (11), l'unité de traitement de données (3) étant réalisée pour créer le film vidéo stéréoscopique (2) à partir de deux films vidéo monoscopiques ayant un contenu identique et retardés dans le temps l'un par rapport à l'autre, **caractérisé en ce que**
en présence d'une première composante de mouvement (17) de l'appareil d'enregistrement vidéo (4) en direction de l'axe optique de l'objectif individuel (8), pendant une succession d'au moins deux trames consécutives (21), l'unité de traitement de données (3) ne sélectionne que la moitié de gauche (22) ou que la moitié de droite (23) des trames (21) du film vidéo monoscopique (7) pour représenter en tant que film vidéo stéréoscopique les films vidéo monoscopiques ayant un contenu identique et retardés dans le temps l'un par rapport à l'autre.

2. Système (1) selon la revendication 1, **caractérisé en ce qu'**une seconde composante de mouvement (18) de l'appareil d'enregistrement vidéo (4) transversalement à la direction de l'axe optique de l'objectif individuel (8) est déterminée, et
en présence exclusivement de la première composante de mouvement (17) pendant une succession d'au moins deux trames consécutives (21), l'unité de traitement de données (3) est réalisée pour déterminer le film vidéo stéréoscopique (2) selon un premier traitement (15) et, en présence de la seconde composante de mouvement (18) pendant une succession d'au moins deux trames consécutives (21), elle est réalisée pour déterminer le film vidéo stéréoscopique (2) selon un second traitement (16).

3. Système (1) selon la revendication 2, **caractérisé en ce que** lors du premier traitement (15), la moitié de gauche (22) ou la moitié de droite (23) des trames (21) du film vidéo monoscopique (7) étant sélectionnée, l'unité de traitement de données (3) est réalisée pour la diffusion retardée du film vidéo monoscopique pour l'oeil de gauche (24) ou pour l'oeil de droite (25) de l'observateur (26) du film vidéo stéréoscopique (2) et pour la diffusion non retardée du film vidéo monoscopique pour l'oeil de droite (25) ou pour l'oeil de gauche (24) de l'observateur (26) du film vidéo stéréoscopique (2).

4. Système (1) selon la revendication 2, **caractérisé en ce que** lors du second traitement (16), en présence d'une seconde composante de mouvement (18) qui correspond à un mouvement relatif de l'appareil d'enregistrement vidéo (4) par rapport à l'objet filmé (11) de la gauche vers la droite ou de la droite vers la gauche, l'unité de traitement de données (3) est réalisée pour la diffusion retardée du film vidéo monoscopique pour l'oeil de gauche (24) ou pour l'oeil de droite (25) de l'observateur (26) du film vidéo stéréoscopique (2) et pour la diffusion non retardée du film vidéo monoscopique pour l'oeil de droite (25) ou pour l'oeil de gauche (24) de l'observateur (26) du film vidéo stéréoscopique (2).

5. Système (1) selon l'une des revendications précédentes, **caractérisé en ce que** l'information de mouvement (14) associée au film vidéo monoscopique (7) caractérise la direction de mouvement (27) de l'appareil d'enregistrement vidéo (4) par rapport à l'objet filmé (11), une vitesse de mouvement de l'appareil d'enregistrement vidéo (4) et une vitesse d'enregistrement de l'appareil d'enregistrement vidéo (4).

6. Système (1) selon l'une des revendications précédentes, **caractérisé en ce que** l'unité de traitement de données (3) est réalisée pour créer le film vidéo stéréoscopique (2) à partir de deux films vidéo monoscopiques ayant un contenu identique et retardés dans le temps l'un par rapport à l'autre, et la sélection de la diffusion retardée soit pour l'oeil gauche (24) soit pour l'oeil droit (25) de l'observateur (26) ainsi que du montant de la valeur temporelle de cette diffusion retardée peut se faire manuellement.

7. Système (1) selon l'une des revendications précédentes, le système (1) comprenant l'appareil d'enregistrement vidéo (4) sur lequel est prévu un stabilisateur à 3 axes (30) qui est réalisé pour stabiliser l'appareil d'enregistrement vidéo (4) pendant l'enregistrement du film vidéo monoscopique (7).

8. Système (1) selon l'une des revendications précédentes, **caractérisé en ce que** le système (1) comprend une mémoire de données permanentes (5) réalisée pour stocker le film vidéo monoscopique (7) enregistré avec l'appareil d'enregistrement vidéo (4), ou une unité de communication de données (32) qui est réalisée pour la communication sans fil du film vidéo monoscopique (7) enregistré et l'information de mouvement (14) associée au film vidéo monoscopique (7).

9. Système (1) selon la revendication 7, **caractérisé en ce qu'**il est prévu un moyen de transport (29) autonome sans opérateur, de préférence un drone, pour l'enregistrement et le guidage de l'appareil d'enregistrement vidéo (4), le moyen de transport (29) autonome sans opérateur comprenant le stabilisateur à 3 axes (30) et un module GPS (31).

10. Système (1) selon l'une des revendications précédentes, dans lequel le système (1) comprend une unité d'affichage stéréoscopique (6) qui est reliée à l'unité de traitement de données (3) et qui est réalisée pour afficher le film vidéo stéréoscopique (2), l'unité d'affichage stéréoscopique (6) étant réalisée sous forme d'écran d'un appareil de télévision ou d'un ordinateur ou sous forme de projecteur et comprenant des lunettes 3D, de préférence des lunettes 3D dites Virtual Reality actives ou passives.

11. Système (1) selon l'une des revendications précédentes, **caractérisé en ce que** l'unité de traitement de données (3) est réalisée sous forme d'appareil de télécommunication mobile (33), tel que par exemple un smartphone, ou sous forme d'ordinateur du type tablette mobile, l'unité de traitement de données (3) étant prévue dans un boîtier (34), conjointement avec l'écran de l'unité d'affichage stéréoscopique (6).

12. Système (1) selon la revendication 10, **caractérisé en ce que** l'appareil d'enregistrement vidéo (4) en position stationnaire est réalisé pour l'enregistrement d'un film vidéo monoscopique (36) sur 360 degrés par une rotation complète sur 360 degrés sensiblement parallèlement à la surface terrestre autour d'un axe perpendiculaire à la surface terrestre, l'unité de traitement de données (3) étant réalisée pour déterminer une image panoramique stéréoscopique (35) à partir de deux films vidéo monoscopiques sur 360 degrés ayant un contenu identique et retardés dans le temps l'un par rapport à l'autre, la diffusion de l'image panoramique stéréoscopique (35) s'effectuant selon la direction de mouvement et selon la vitesse de mouvement des lunettes 3D (38) de l'observateur (26).

13. Système (1) selon l'une des revendications précédentes, **caractérisé en ce que** l'appareil d'enregistrement vidéo (4) est réalisé sous forme d'appareil d'enregistrement vidéo sur 360 degrés, l'appareil d'enregistrement vidéo sur 360 degrés comprenant un objectif individuel (8) qui couvre une zone d'enregistrement de 360 degrés transversalement à l'axe optique de l'objectif individuel (8).

14. Procédé de réalisation d'un film vidéo stéréoscopique (2) à partir d'un film vidéo monoscopique (7) enregistré par un appareil d'enregistrement vidéo (4) comprenant un seul objectif individuel (8), comprenant les étapes consistant à :
A) recevoir le film vidéo monoscopique (7) et le cas échant une information de mouvement (14) associée au film vidéo monoscopique (7) ;
B) évaluer ou déterminer l'information de mouvement (14) associée au film vidéo monoscopique (7), information qui caractérise une direction de mouvement (27) de l'appareil d'enregistrement vidéo (4) par rapport à un objet filmé (11), et
en présence d'une première composante de mouvement (17) de l'appareil d'enregistrement vidéo (4) en direction de l'axe optique de l'objectif individuel (8), pendant une succession d'au moins deux trames consécutives (21), seulement la moitié de gauche (22) ou seulement la moitié de droite (23) des trames (21) du film vidéo monoscopique (7) est sélectée lors d'une étape de procédé suivante C) ;
C) déterminer deux films vidéo monoscopiques, ayant un contenu identique, du film vidéo stéréoscopique (2) à diffuser à partir du film vidéo monoscopique (7) ;
D) retarder l'un des deux films vidéo monoscopiques du film vidéo stéréoscopique (2) à diffuser.

15. Procédé selon la revendication 14, **caractérisé en ce qu'**après l'étape de procédé D), dans une étape de procédé E), le film vidéo stéréoscopique (2) réalisé dans les étapes de procédé A) - D) est diffusé à une unité d'affichage stéréoscopique (6).
